Europäisches Patentamt

(19) European Patent Office

Office européen des brevets

(11) Numéro de publication: **0 138 679**
**B1**

(12) **FASCICULE DE BREVET EUROPÉEN**

(45) Date de publication du fascicule du brevet:
22.07.87

(21) Numéro de dépôt: **84401888.7**

(22) Date de dépôt: **21.09.84**

(51) Int. Cl.⁴: **C 07 F 7/16,** B 01 J 23/82,
B 01 J 23/84

(54) **Procédé et catalyseur avec un alcalin comme additif pour la synthèse directe du diméthyldichlorosilane.**

(30) Priorité: **28.09.83 FR 8315401**

(43) Date de publication de la demande:
**24.04.85 Bulletin 85/17**

(45) Mention de la délivrance du brevet:
**22.07.87 Bulletin 87/30**

(84) Etats contractants désignés:
**AT BE CH DE FR GB IT LI LU NL SE**

(56) Documents cité:
**DE-B-1 161 430**
**FR-A-940 374**
**FR-A-1 144 231**

(73) Titulaire: **RHONE- POULENC SPECIALITES CHIMIQUES, "Les Miroirs" 18, Avenue d'Alsace, F-92400 Courbevoie (FR)**

(72) Inventeur: **Prud'Homme, Christian, 19, rue Commandant Faurax, F-69006 - Lyon (FR)**
Inventeur: **Simon, Gérard, 3 Clos Avril, F-38150 - Roussillon (FR)**

(74) Mandataire: **Seugnet, Jean Louis, RHONE- POULENC INTERSERVICES Service Brevets Chimie 25, quai Paul Doumer, F-92408 Courbevoie Cédex (FR)**

EP 0 138 679 B1

## Description

La présente invention concerne un procédé et un catalyseur pour la synthèse directe du diméthyldichlorosilane.

Le procédé industriel de fabrication d'organochlorosilanes et en particulier de diméthyldichlorosilane dénommé par la suite DMCS est un procédé bien connu qui est décrit notamment dans le brevet des Etats-Unis d'Amérique n° 2 380 995, ainsi que dans l'ouvrage de Walter NOLL, Chemistry and Technology of Silicones, 1968; édition Academic Press Inc. p. 26-41.

Selon ce procédé dit de "synthèse directe" ou "synthèse de Rochow", on fabrique directement les organochlorosilanes et, en particulier, le DMCS par réaction du chlorure de méthyle sur le silicium solide en présence de cuivre comme catalyseur suivant la réaction:

$$2 CH_3 Cl + Si \rightarrow (CH_3) Cl_2 Si$$

En réalité il se forme au cours de la synthèse directe d'autres produits suivant les réactions notamment $CH_3 Cl_3 Si$ dénommé par la suite MTCS et $(CH_3)_3 Cl Si$ dénommé par la suite TMCS.

Il se forme également d'autres sous produits comme par exemple $Me H Si Cl_2$ et $Me_2 H Si Cl$ et des produits lourds qui sont des polysilanes, essentiellement des disilanes.

Parmi tous les produits obtenus par synthèse directe, le DMCS est le produit le plus recherché. Ce produit, après hydrolyse et polymérisation, permet d'obtenir des huiles et des gommes qui sont des produits de base pour la fabrication des silicones. Ainsi le DMCS sert à la préparation de résines de polyorganosiloxane, comme le décrivent les brevets des Etats-Unis d'Amérique n° 2 258 218 à 2 258 222, à la préparation d'huiles décrites dans les brevets des Etats-Unis d'Amérique n° 2 469 888 et 2 469 830 et à la préparation d'élastomère de polyorganosiloxane, décrits dans le brevet des Etats-Unis d'Amérique n° 2 448 756.

Il est connu d'utiliser le cuivre ou les composés chimiques du cuivre comme catalyseur de la réaction de synthèse directe utilisé sous la forme d'un alliage ou d'un mélange mécanique avec le silicium éventuellement disposé sur un support minéral.

De façon à améliorer le rendement en DMCS, on a déjà proposé de rajouter divers additifs au cuivre. Ces additifs peuvent être le zinc ou un halogénure de zinc (brevet U.S. 2 464 033), l'aluminium (brevets US 2 403 370 et 2 427 605), l'étain, le manganèse, le nickel et l'argent (brevet britannique 1 207 466), le cobalt (brevet britannique 907 161), le chlorure de potassium (brevet soviétique n° 307 650).

Les procédés mettant en oeuvre ces additifs permettent certes de perfectionner le procédé de synthèse directe mais ils présentent néanmoins au moins l'un des inconvénients suivants:

- la sélectivité en DMCS évalué par le rapport pondéral moyen $\frac{MTCS}{DMCS}$, et/ou par le % molaire de DMCS par rapport à la totalité des silanes obtenus demeurent insuffisants;
- le temps d'amorçage et la température d'amorçage de la réaction sont trop élevés;
- l'activité moyenne du système catalytique dénommée également productivité évaluée en poids des méthylchlorosilanes (MCS) obtenus par heure et par kg de silicium introduit et le taux de transformation maximum du silicium demeurent insuffisants;
- le système catalytique est sensible aux impuretés;
- la formation de sous-produits et en particulier de disilanes demeure élevée.

La présente invention a précisemment pour but de proposer un procédé et un catalyseur pour la mise en oeuvre du procédé de synthèse directe qui ne présentent pas les inconvénients ci-dessus, ou qui permettent à tout le moint d'en atténuer sensiblement les effets.

Un but de la présente invention est de proposer un procédé et un catalyseur permettant d'obtenir:
- une sélectivité moyenne en DMCS élevée tout en augmentant la productivité c'est-à-dire la quantité de MCS produite par unité de temps et par unité de masse de contact;
- une sélectivité initiale élevée en début de réaction maintenue jusqu'à la dégradation finale du système catalytique;
- un taux de transformation maximum de silicium élevé;
- une teneur pondérale faible en produits "lourds" par rapport aux MCS obtenus;
- une moins grande sensibilité du système catalytique vis-à-vis des impuretés qui sont un poison du catalyseur (en particulier le plomb);
- une température de résction pas trop élevée.

Ces buts et d'autres qui apparaîtront à la lecture de la description détaillée ci-dessous sont atteints par la présente invention qui concerne en effet un procédé de fabrication de diméthyldichlorosilane par réaction de chlorure de méthyle sur une masse de contact solide formée de silicium et d'un catalyseur comportant du cuivre ou un composé du cuivre, ledit procédé étant caractérisé en ce que le catalyseur comporte en outre entre 30 et 1000 ppm (calculés en étain et/ou antimoine métal) d'au moins un métal choisi parmi l'étain et l'antimoine ou d'un composé de l'étain et/ou l'antimoine et entre 0,05 et 2 %, de préférence entre 0,1 et 1 % (calculés en alcalin métal) d'au moins un métal alcalin choisi parmi le lithium, le sodium, le potassium et le rubidium ou d'un composé de même alcalin par rapport à la masse de contact solide.

Le catalyseur peut être utilisé à une teneur pondérale de 1 à 30 %, de préférence de 5 à 12 % par rapport au poids total de la masse de contact.

Le catalyseur peut être incorporé au silicium sous forme d'un alliage ou bien sous forme d'un mélange mécanique.

Comme composé du cuivre on peut utiliser à côté du cuivre métallique, notamment un halogénure de cuivre, un oxyde de cuivre par exemple CuO et $Cu_2O$ comme décrit dans le brevet US 2 464 033.

Comme halogénure de cuivre on peut utiliser du chlorure cuivrique ou le chlorure cuivreux. On a en effet mis en évidence, conformément à la présente invention, que l'on obtient de meilleurs résultats notamment en sélectivité et en taux de transformation de silicium si on introduisait le cuivre sous forme de chlorure cuivreux, ou cuivrique.

Selon un mode de réalisation particulier, le catalyseur peut contenir en outre du zinc métallique ou un composé de zinc de préférence du chlorure de zinc, ou de l'oxyde de zinc.

Le zinc peut être présent à une teneur pondérale comprise entre 0,1 et 3 %, de préférence entre 0,2 et 1 %, (calculée en zinc métal) en poids par rapport au poids de la masse de contact. Jusqu'à 90 % en poids du zinc de préférence jusqu'à 50 % du zinc peut être remplacé par un autre métal qui catalyse la chloruration du cuivre et/ou qui forme un eutectique ou une phase à bas point de fusion avec les sels de cuivre et/ou d'alcalins.

Comme métal pouvant convenir on peut citer le cadmium, l'aluminium, le manganèse, le nickel et l'argent.

Comme composé de métal alcalin choisi parmi Li, Na, K et Rb, seuls ou en mélange, on peut utiliser, outre le ou les métaux purs, les halogénures de préférence les chlorures. Le rubidium et, à un degré moindre, le potassium, seuls ou en mélanges ou sous forme de composés, de préférences les chlorures sont les additifs préférés.

Il est est souhaitable que la dimension particulaire du silicium soit telle que le diamètre d'au moins 50 pour cent en poids des particules soit compris entre 10 et 500 μm.

De même le catalyseur se trouve également sous forme de particules dont le diamètre moyen est avantageusement compris entre 1 et 100 μm. Dans ces conditions de granulométrie de la masse de contact on peut mettre en oeuvre la réaction de synthèse directe avec une masse de contact sous forme d'un lit fluidisé.

Le procédé de synthèse directe selon l'invention peut être mis en oeuvre de façon générale dans un des trois types d'appareillages suivants: un réacteur du type à lit agité comme celui décrit dans le brevet des Etats-Unis d'Amérique n° 2 449 821, un réacteur du type à lit fluidisé comme celui décrit dans le brevet des Etats-Unis d'Amérique n° 2 389 931 ou dans un four rotatif.

Le catalyseur peut être également utilisé déposé sur une matière minérale en particules comme le sable, la silice broyée, le gel de silice, l'alumine, la brique réfractaire broyée, les catalyseurs pour le craquage du pétrole, des zéolites et des argiles calcinées comme décrit dans le brevet français 1 545 407.

La réaction a lieu à une température comprise entre 280 et 450°C en particulier entre 290 et 370°C.

On peut réaliser la réaction directement à la température choisie sans amorçage de la réaction à température plus élevée en particulier quand la température de réaction choisie est de l'ordre de 330°C ou plus en lit fluidise.

La teneur pondérale en métal alcalin ou en composé de métal alcalin calculée en alcalin métal est comprise entre environ 0,05 et 2 % en poids par rapport au poids de la masse de contact de préférence entre 0,1 et 1,0 % en poids. Au-dessous de 0,05 % l'action du métal alcalin n'est pas vraiment décelable et au-dessus de 2 % en poids, le métal alcalin a un effet poison qui abaisse notamment la sélectivité.

La teneur pondérale en étain et/ou antimoine ou en composé de l'étain et/ou de l'antimoine (calculée en étain et/ou antimoine métal) est comprise entre 30 et 1 000 ppm de préférence entre 80 et 250 ppm par rapport à la masse de contact.

Il est nécessaire d'avoir au moins 30 ppm d'étain et/ou d'antimoine. On a en effet mis en évidence conformément à l'invention que les effets bénéfiques d'un métal alcalin ou d'un composé d'un métal alcalin ne sont obtenus qu'en présence d'étain et/ou d'antimoine. En outre une teneur pondérale supérieure à 1 000 ppm aurait un effet néfaste sur la réaction et notamment sur la sélectivité. L'étain qui est le métal préféré peut être ajouté sous forme de bronze ou sous forme d'un composé d'étain par exemple de chlorure d'étain.

On a mis en évidence conformément à l'invention que si l'on voulait mettre en oeuvre la réaction à température plus basse que 350-360°C tout en gardant sensiblement les mêmes avantages, on pouvait ajouter du zinc ou un composé du zinc, de préférence le chlorure de zinc à une teneur pondérale par rapport à la masse de contact comprise entre 0,1 et 3 % de préférence entre 0,2 et 1 %.

En utilisant un catalyseur selon l'invention on peut obtenir, lorsque la réaction est mise en oeuvre en lit agité à une température de 330-350°C, des sélectivités élevées.

On peut ainsi obtenir un rapport ponderal moyen $\frac{MTCS}{DMCS}$ compris généralement entre 0,05 et 0,15, le plus souvent 0,07 et 1,2 et un % molaire moyen en DMCS par rapport à la totalité des silanes obtenus de l'ordre ou supérieur à 80 % pouvant atteindre 90 % et plus, un taux de transformation maximum en silicium de l'ordre ou supérieur à 55 % et pouvant atteindre environ 70 %, une activité moyenne de l'ordre ou supérieur à 125 g de MCS/h/kg Si et pouvant atteindre 180 g MCS/h/kg/Si et plus.

Une sélectivité de l'ordre ou supérieure à 80 % apparaît comme particulièrement surprenante par rapport aux sélectivités que l'on obtient en utilisant des masses catalytiques du même type mais ne comportant pas de métal alcalin comme cela apparaît à la lecture des exemples du brevet français 1 545 407.

Par ailleurs, si l'on utilise une masse de contact conforme à l'invention mais ne comportant pas d'étain et/ou d'antimoine, on obtient une masse de contact très peu active et donc inutilisable industriellement.

Le pourcentage de lourds obtenus par rapport aux MCS obtenus peut être de l'ordre de 2 % et il est généralement inférieur à 4 % environ.

Ces résultats peuvent être encore améliorés si on augmente la température de réaction. On obtient des résultats similaires si on effectue la réaction en lit fluidisé.

Si l'on effectue la réaction à une température inférieure à 340°C en lit agité il est souhaitable d'amorcer la

# 0 138 679

rèaction pendant quelques dizaines de minutes à une températuré supérieure à 340°C. Cet amorçage est inutile quand on opère à une température supérieure à 340°C en lit agité.

D'autres avantages et caractéristiques de la présente invention apparaîtront à la lecture des exemples suivants donnés à tire illustratif nullement limitatif.

Dans les exemples suivants, sauf mention contraire, on utilise un réacteur pilote cylindrique de diamètre intérieur 60 mm et de hauteur: 250 mm muni à sa base d'un distributeur de gaz en verre fritté. Le silicium et le catalyseur sont chargés sous forme d'une poudre dont la taille moyenne d'au moins 50 % des particules est comprise entre 60 et 200 μm.

La réaction s'effectue en lit agité et le réacteur est muni d'un élément chauffant extérieur.

## Exemple 1

### Système catalytique CuCl / ZnCl₂ / Sn / KCl

Dans un réacteur vertical, cylindrique en verre, muni d'un agitateur métallique et d'un distributeur de gaz en verre fritté, on charge une poudre constituée de 210 g de silicium, 16,37 g de chlorure cuivreux, 0,835 g de chlorure de potassium, 1,53 g de ZnCl₂ et 1,99 g de bronze contenant 1,9 % d'étain, le pourcentage en poids de KCl par rapport à la masse de contact est de 0,36.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit mesuré à 20°C de 16 l/h.

Après 1 h de chauffage régulé à 345°C, le débit de chlorure de méthyle est porté à 26 l/h et maintenu à cette valeur jusqu'à l'arrêt total spontané de la réaction. La température de la réaction est de 330°C.

Cet essai a produit des chlorosilanes pendant 21 h avec une productivité ou activité moyenne de 184 g de MCS par heure et par kg de Si chargé dans le réacteur. Le mélange produit est caractérisé par un rapport pondéral moyen $\frac{MTCS}{DMCS}$ égal à 0,126 et un % molaire moyen de DMCS de 82,23.

La proportion de "lourds" (polysilanes) obtenue s'élève à 3,62 % en poids.

Par chromatographie en phase vapeur, on trouve les sélectivités molaires moyennes suivantes:

$Me_3 SiCl$ : 5,58 %

$Me SiCl_3$ : 8,97 %

Le taux de transformation maximum du silicium est de 84,3 %.

## Exemple 2

### Système catalytique: CuCl₂ / ZnCl₂ / Sn / RbCl

Dans un réacteur vertical, cylindrique en verre, muni d'un agitateur métallique et d'un distributeur de gaz en verre fritté, on charge un poudre composée de: 210 g de silicium, 1,53 g de ZnCl₂, 16,37 g de chlorure cuivreux, 1,355 g de chlorure de potassium et 1,99 g de bronze contenant 1,9 % d'étain.

Le pourcentage en poids de RbCl par rapport à la masse de contact est de 0,58.

On chauffe progressivement le réacteur jusqu'à 200°C sous un courant d'azote. Puis, en continuant d'élever la température du réacteur, on ferme le robinet d'azote et on commence à introduire le chlorure de méthyle avec un débit (mesuré à 20°C) de 16 l/h.

Après 1 heure de chauffage régulé à 345°C, le débit de chlorure de méthyle est porté à 26 l/h et maintenu à cette valeur, jusqu'à l'arrêt total spontané de la réaction. La température de la réaction est de 330°C.

Cet essai a produit des chlorosilanes pendant 20 h avec une productivité moyenne de 178 g de MCS par heure et par kg de silicium chargé dans le réacteur. Le mélange produit est caractérisé par un rapport pondéral moyen méthyltrichlorosilane sur diméthyldichlorosilane $\frac{MTCS}{DMCS}$ égal à 0,113 et un % molaire moyen en DMCS de 84,44 %.

La proportion de lourds (polysilanes) obtenue s'élève à 3,16 % (en poids).

Par chromatographie en phase vapeur, on trouve les sélectivités molaires moyennes suivantes:

$Me_3 SiCl$: 4,32 %

$Me SiCl_3$: 8,26 %

Le taux de transformation maximum du silicium est de 77,5 %.

## Exemples 3 A 4

On met en oeuvre la réaction de la même façon que dans l'exemple 1 avec 210 g de silicium sauf que l'on modifie la composition du catalyseur.

Les résultats sont rassemblés dans le tableau I ci-après:

4

**Tableau 1**

| EXEMPLE | 3 | 4 |
|---|---|---|
| Catalyseur (en g) | | |
| bronze (à 1,9 % Sn) | 1,99 | 1,99 |
| CuCl | 16,37 | 16,37 |
| $ZnCl_2$ | 1,53 | 1,53 |
| KCl | 0,15 | 0,278 |
| T°0 amorçage | 345 | 345 |
| réaction | 330 | 330 |
| Productivité | 162 | 165 |
| g MCS/h/Kg Si | | |
| MTCS / DMCS moyen % molaire | | |
| ein poids de lourds par | 0,081 | 0,097 |
| rapport aux MCS formés | | |
| Taux de transformation maximum Si | 72,4 | 62,7 |
| Sélectivité moyenne % molaire DMCS | 86,49 | 83,51 |
| par rapport aux silanes obtenus | | |

## Revendications

1. Procédé de fabrication de diméthyldichlorosilane par réaction de chlorure de méthyle sur une masse de contact solide formée de silicium et d'un catalyseur comportant du cuivre ou un composé du cuivre, ledit procédé étant caractérisé en ce que le catalyseur comporte en outre entre 30 et 1 000 ppm d'au moins un métal choisi parmi l'étain et l'antimoine (calculés en étain et/ou antimoine métal), ou d'un composé de l'étain et/ou l'antimoine et entre 0,05 et 2 % (calculés en alcalin métal) au moins d'un metal alcalin choisi parmi le lithium, le sodium, le potassium et le rubidium ou d'un composé dudit métal alcalin, par rapport à la masse de contact solide.

2. Procédé selon la revendication 1, caractérisé en ce que la teneur en métal alcalin (calculée en alcalin métal) est comprise entre 0,1 et 1 % en poids.

3. Procédé selon la revendication 1 ou 2, caractérisé en ce que la teneur en étain et/ou antimoine est comprise entre 80 et 250 ppm.

4. Procédé selon la revendication 1, 2 ou 3, caractérisé en ce que le métal alcalin est choisi parmi le potassium et le rubidium.

5. Procédé selon l'une quelconque des revendications précédentes, caractérisé en ce que le catalyseur comporte en outre de 0,1 à 3 % environ (calculés en zinc métal) de zinc ou d'un composé du zinc par rapport à la masse de contact solide.

6. Procédé selon la revendication 5, caractérisé en ce que jusqu'à 90 % en poids du zinc est remplacé par un métal qui catalyse la chloruration du cuivre et/ou qui forme un eutectique ou une phase à bas point de fusion avec les sels de cuivre et/ou d'alcalins.

7. Procédé selon la revendication 6, caractérisé en ce que le métal est choisi parmi l'aluminium, le cadmium, le manganèse, le nickel et l'argent.

8. Procédé selon l'une quelconque des revendications précédentes, caractérisé en ce que le catalyseur comportant du cuivre ou composé du cuivre utilsé est choisi parmi le cuivre, le chlorure cuivreux et le chlorure cuivrique.

9. Procédé selon l'une quelconque des revendications 5 à 8, caractérisé en ce que la teneur pondérale en zinc est comprise entre 0,2 et 1 %.

10. Procédé selon l'une quelconque des revendications précédentes, caractérisé en ce que la réaction est mise en oeuvre dans un réacteur choisi parmi un réacteur à lit agité, un réacteur à lit fluidisé, un four rotatif.

11. Catalyseur pour la mise en oeuvre d'un procédé de synthèse directe par réaction de chlorure de méthyle sur du silicium, tel que défini à l'une quelconque des revendications 1 à 9.

## Patentansprüche

1. Verfahren zur Herstellung von Dimethyldichlorsilan durch Reaktion von Methylchlorid auf einer festen Kontaktmasse, welche aus Silicium und einem Katalysator, der aus Kupfer oder einer Kupferverbindung besteht, gebildet ist, dadurch gekennzeichnet, dan der Katalysator außerdem zwischen 30 und 1000 ppm wenigstens eines Metalls, ausgewählt unter Zinn und Antimon (berechnet auf Zinn- und/oder Antimonmetall) oder einer Verbindung von Zinn und/oder Antimon und zwischen 0,05 und 2 % (berechnet auf Alkalimetall) wenigstens eines Alkalimetalls, ausgewählt aus Lithium, Natrium, Kalium und Rubidium oder einer Verbindung des genannten Alkalimetalls, bezogen auf die feste Kontaktmasse, umfaßt.

2. Verfahren gemäß Anspruch 1, dadurch gekennzeichnet, daß der Gehalt an Alkalimetall (berechnet auf Alkalimetall) zwischen 0,1 und 1 Gew.-% beträgt.

3. Verfahren gemäß Anspruch 1 oder 2, dadurch gekennzeichnet, dan der Gehalt an Zinn und/oder Antimon zwischen 80 und 250 ppm beträgt.

4. Verfahren gemäß Anspruch 1, 2 oder 3, dadurch gekennzeichnet, dan das Alkalimetall ausgewählt ist unter Kalium und Rubidium.

5. Verfahren gemäß einem der vorhergehenden Ansprüche, dadurch gekennzeichnet, daß der Katalysator außerdem 0,1 bis 3 % (berechnet auf Zinkmetall) an Zink oder einer Zinkverbindung, bezogen auf die feste Kontaktmasse, umfant.

6. Verfahren gemäß Anspruch 5, dadurch gekennzeichnet, daß bis zu 90 Gew.-% des Zinks durch ein Metall ersetzt ist, welches die Chlorierung von Kupfer katalysiert und/oder ein Eutektikum oder eine Phase mit niedrigem Schmelzpunkt mit den Kupfer- und/oder Alkalisalzen bildet.

7. Verfahren gemäß Anspruch 6, dadurch gekennzeichnet, dan das Metall ausgewählt ist unter Aluminium, Cadmium, Mangan, Nickel und Silber.

8. Verfahren gemäß einem der vorhergehenden Ansprüche, dadurch gekennzeichnet, daß der verwendete Katalysator, bestehend aus Kupfer oder einer Kupferverbindung, ausgewählt ist aus Kupfer, Kupfer(I)-Chlorid und Kupfer(II)-Chlorid.

9. Verfahren gemäß einem der Ansprüche 5 bis 8, dadurch gekennzeichnet, daß der Gewichtsgehalt an Zink zwischen 0,2 und 1 % beträgt.

10. Verfahren gemäß einem der vorhergehenden Ansprüche, dadurch gekennzeichnet, daß die Reaktion in einem Reaktor, der ausgewählt ist unter einem Rührbett-Reaktor, einem Fließbett-Reaktor, einem Rotationsofen, ausgeführt wird.

11. Katalysator zur Ausführung eines direkten Syntheseverfahrens durch Reaktion von Methylchlorid auf Silicium, wie in einem der Ansprüche 1 bis 9 definiert.

## Claims

1. Process for the manufacture of dimethyldichlorosilane by reaction of methyl chloride with a solid contact reactant consisting of silicon and of a catalyst containing copper or a copper compound, the said process being characterized in that the catalyst additionally comprises between 30 and 1,000 ppm of at least one metal chosen from tin and antimony (calculated as tin and/or antimony metal), or of a tin and/or antimony compound and between 0.05 and 2 % (calculated as alkali metal) of at least one alkali metal chosen from lithium, sodium, potassium and rubidium or of a compound of the said alkali metal, based on the mass of contact solid.

2. Process according to Claim 1, characterized in that the content of alkali metal (calculated as alkali metal) is between 0.1 and 1 % by weight.

3. Process according to Claim 1 or 2, characterized in that the content of tin and/or antimony is between 80 and 250 ppm.

4. Process according to Claim 1, 2, or 3, characterized in that the alkali metal is chosen from potassium and rubidium.

5. Process according to any one of the preceding claims, characterized in that the catalyst additionally comprises from 0.1 to 3 % (calculated as zinc metal) of zinc or of a zinc compound, based on the mass of contact solid.

6. Process according to Claim 5, characterized in that up to 90 % by weight of the zinc is replaced by a metal which catalyses the chlorination of copper and/or which forms a eutectic or a low melting point phase with copper salts and/or alkali metal salts.

7. Process according to Claim 6, characterized in that the metal is chosen from aluminium, cadmium, manganese, nickel and silver.

8. Process according to any one of the preceding claims, characterized in that the catalyst used, comprising copper or a copper compound, is chosen from copper, cuprous chloride and cupric chloride.

9. Process according to any one of Claims 5 to 8, characterized in that the weight content of zinc is between 0.2 and 1 %.

10. Process according to any one of the preceding claims, characterized in that the reaction is performed in a reactor chosen from an agitated bed reactor, a fluidized bed reactor and a rotary oven.

11. Catalyst for making use of a process of direct synthesis by reaction of methyl chloride with silicon, such as defined in any one of Claims 1 to 9.